# EUROPEAN PATENT SPECIFICATION

(11) **EP 1 294 555 B1**
(45) Date of publication and mention of the grant of the patent: **01.02.2006**
(21) Application number: 00986463.8
(22) Date of filing: 15.12.2000
(51) Int. Cl.: B29D 11/00, B29C 37/00

(54) **PROCESS FOR THE AUTOMATED MANUFACTURE OF SPECTACLE LENSES**
VERFAHREN ZUR AUTOMATISCHEN HERSTELLUNG VON BRILLENLINSEN
PROCEDE DE FABRICATION AUTOMATIQUE DE VERRES DE LUNETTES

(30) Priority: 26.05.2000 US 579048
(43) Date of publication of application: 26.03.2003
(73) Proprietor: ESSILOR INTERNATIONAL (COMPAGNIE GENERALE D'OPTIQUE), 94220 Charenton le Pont (FR)
(72) Inventor: MARCEAU, Gary, Roanoke, VA 24018 (US); BOULAY, Dan, Roanoke, VA 24012 (US); NUNEZ, Ivan, Roanoke, VA 24018 (US); FOSTER, Charles, Thaxton, VA 24174 (US); DOGAN, Eric, Roanoke, VA 24014 (US); BISHOP, Joseph, A., Salem, VA 24153 (US); GUPTA, Amitava, Roanoke, VA 24014 (US); HAMBLIN, Steven, Daleville, VA 24083 (US); MENEZES, Edgar, V., Roanoke, VA 24018 (US); SEKHARIPURAM, Venkat, Troutville, VA 24175 (US); MERRITT, James, Troutville, VA 24175 (US); ULLOA, Jose, Roanoke, VA 24018 (US); KOKONASKI, William, Roanoke, VA 24018 (US); BASHAM, Elbert, Roanoke, VA 24017 (US); ALTON, Michele, L., Vinton, VA 24179 (US); BLUM, Ronald, Roanoke, VA 24012 (US); KOK, Ron, NL-5605 Eindhoven (NL); HOMPUS, Michael, NL-5701 AJ Helmond (NL); VAN NUNEN, Jack, NL-5513 BP Wintelre (NL); VAN DOORN, Edward, NL-5704 EK Helmond (NL); Evers, Marc, NL-5665 GT Geldrop (NL)
(74) Representative: Perin, Georges
(86) International application number: PCT/US2000/034155
(87) International publication number: WO 2001/091994

(56) References cited:
- EP-A- 0 031 633
- EP-A- 0 515 149
- EP-A- 0 691 195
- WO-A-94/04345
- WO-A-98/07554
- US-A- 2 967 329
- US-A- 5 216 455
- US-A- 5 244 470
- US-A- 5 288 221
- US-A- 5 372 755
- US-A- 5 451 281
- US-A- 5 524 419
- PATENT ABSTRACTS OF JAPAN vol. 1997, no. 03, 31 March 1997 (1997-03-31) & JP 08 294977 A (SEIKO EPSON CORP), 12 November 1996 (1996-11-12)

## Description

### Field of the Invention

The present invention relates to ophthalmic lenses. In particular, the invention provides an efficient, automated process for the manufacturing of finished, spectacle lenses.

### Background of the Invention

The use of spectacle lenses for the correction of ametropia is well known. The majority of spectacle lenses are not produced in a single, automated process. Rather, lens blanks are manufactured, which blanks then must be sent to surfacing laboratories for grinding, polishing, and edging. Alternatively, some spectacle lenses, such as single vision lenses, are manufactured using whole lens casting. However, whole lens casting is inefficient in that it requires the use of a large inventory of molds, especially in the production of multifocal lenses. Additionally, whole lens casting produces lenses of other than a currently desirable thickness. Further, neither the lens blank nor the whole lens casting methods for producing spectacle lenses are useful in mass producing lenses customized to a specific lens wearer. Therefore, a need exists for a method for the production of spectacle lenses that overcomes these disadvantages.

U.S. Patent No. 5288221 discloses a method for making opthalmic lenses comprising: producing a plurality of optical preforms, each preform comprising at least a first refractive power; fabricating a plurality of unfinished lenses comprising one of the plurality of optical preforms and at least one layer cast onto the preform, the cast layer comprising at least a second refractive power, according to the preamble of claim 1.

European patent application EP-A-515149 discloses determining if lenses meet quality standards by inspecting the lenses. European patent application EP-A-031633 discloses distinguishing lenses from those of another manufacturer by marking the lenses. U.S. Patent No. 5451281 discloses fitting lenses into a frame by edging the lenses.

### Brief Description of the Drawings

FIG. 1 is a flow diagram of an embodiment of the process of the invention.
FIG. 2 is a flow diagram of a portion of the process of FIG. 1.
FIG. 3 is a top view of an apparatus useful in the process of the invention.
FIG. 4 is an exemplary view of a transfer means useful in the apparatus of FIG. 3.
FIG. 5 is an enlarged, perspective view of the platform used in the apparatus of FIG. 3.
FIG. 6 is a flow diagram of a portion of the process of FIG. 1.
FIG. 7 is a flow diagram of a portion of the process of FIG. 6.
FIG. 8 is a flow diagram of a portion of the process of FIG. 1.
FIG 9 is a top view of a machine useful in the process of the invention.
FIG 10 is a perspective view of a platform at a grinding station of the machine of FIG 9.
FIG 11 is a perspective view of a station of the machine of FIG 9.
FIG 12 is a schematic plan view of the components of a casting machine useful in the process of the invention.
FIG 13 is a perspective view of a properly oriented mold as it is transferred to a gimbal fixture in the casting machine of FIG 12.
FIG 14 is a perspective view of a preform as it is removed from a staging conveyor in the casting machine of FIG 12.
FIG 15 is a perspective view of as it is transferred to a turntable platform of the casting machine of FIG 12.
FIG 16 is a perspective view of a preform gripper of the casting machine of FIG 12.
FIG 16a is an elevation in partial cutaway of the preform gripper of FIG 16.
FIG 17 is an exploded view of a gimbal fixture of the casting machine of FIG 12.

### Description of the Invention and its Preferred Embodiments

The present invention provides methods for the efficient, automated mass production of spectacle lenses. In addition, and in contrast to prior art processes, the invention permits automated production of lenses customized for a specific lens wearers. The methods of the invention may be used to produce any type of spectacle lens, such as single vision and multifocal lenses. However, the invention may find its greatest utility in the production of multifocal lenses, particularly progressive addition lenses.

The present invention provides a method for automatically producing spectacle lenses comprising the steps of:
a.) producing a plurality of optical preforms, each of the preforms comprising, at least a first refractive power;
b.) fabricating a plurality of unfinished lenses, each of the unfinished lenses comprising one of the plurality of optical preforms and at least one layer cast onto the preform, the cast layer comprising at least a second refractive power, the step of fabricating a plurality of unfinished lenses comprising providing a mold assembly by:
   (α) selecting a preform and mold;
   (β) orienting the mold and preform; and
   (γ) positioning the preform in relationship to the mold; and characterised in that:
      step (γ) is accomplished by use of a fixture capable of a gimbaling action, and further comprising
c.) finishing each of the plurality of unfinished lenses to form a spectacle lens by performing one or more of the substeps of:
   (i) inspecting optically the unfinished lens;
   (ii) marking the unfinished lens;
   (iii) edging the unfinished lens to produce a finished lens; or
   (iv) packaging the unfinished lens.

For purposes of the invention, "optical preform" or "preform" means a shaped, optically transparent article capable of refracting light and suitable for use in producing a spectacle lens.

The method of the invention eliminates the need for intermediaries between the manufacturer and orderer. Further, the need to maintain a stock of unedged, finished lenses and semifinished blanks is eliminated.

By "customer" is meant an orderer of spectacle lenses. Examples of lens orderers include, without limitation, ophthalmologists, optometrists, opticians, lens retailers, lens wearers, and the like.

"Ordering", means providing an amount of order information regarding the lens desired which amount is effective to enable the lens manufacturer to produce and deliver the desired finished, edged lens. Suitable order information includes, without limitation: a.) lens prescription information, including, without limitation, sphere, cylinder, axis, add power, fitting height, distance zone pupillary distance, and the like, and combinations thereof; b.) frame information including, without limitation, trace data, mount type, manufacturer, model number, and the like, and combinations thereof; c.) lens wearer information; d.) lens information including, without limitation, desired coatings, bevel placement, and the like, and combinations thereof; and e.) delivery information including, without limitation, carrier, destination, and the like, and combinations thereof the like; and f.) combinations of the prescription, frame, wearer, lens information, and delivery information.

Ordering may be carried out by any convenient ordering means including, without limitation, telephone, facsimile transmission, internet website, and the like and combinations thereof. In a preferred embodiment, ordering is carried out via the lens manufacturer's internet website by the customer using any means capable of communicating with the lens manufacturer's server system (web server or web site). Suitable means for communicating with the website include, without limitation, a personal computer and modem.

For purposes of providing frame trace data, preferably the customer creates a trace data file which may be uploaded to the manufacturer's web server frame database during the transmitting step. Alternatively, but less preferred, trace data may be provided to the lens manufacturer by a third party after their receipt of the customer's frames. In yet another embodiment, also less preferred, the customer may provide the lens manufacturer with the frames to be used with the lenses and the lens manufacturer obtains the trace data as a part of the lens manufacturing.

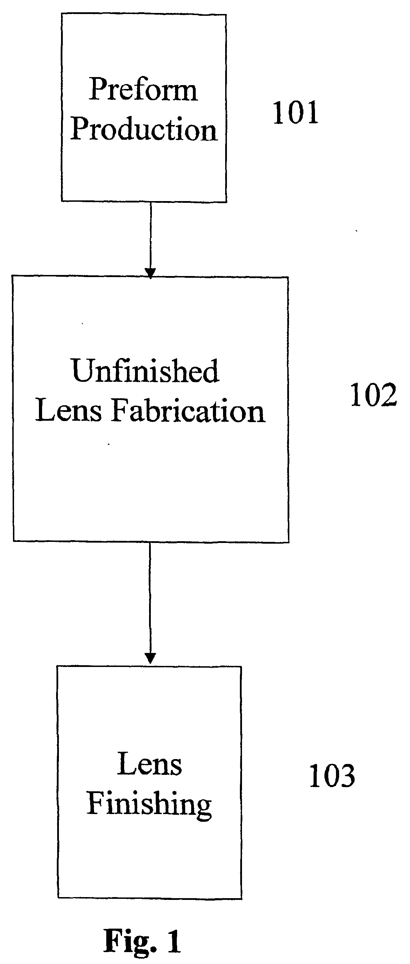

Referring to FIG. 1, a flow diagram of an embodiment of the process of the invention is shown. The process includes preform production (101), unfinished lens fabrication (102), and lens finishing (103). The various apparatuses or machines, and modules incorporating the machines, necessary to carry out the process preferably are positioned relative to one another to permit a continuous, uninterrupted movement of preforms, unfinished and finished lenses. The optical preforms, unfinished and finished lenses move from station to station, or machine to machine, throughout the automated process by any convenient transport means including, without limitation, conveyor, robotic means, and the like, and combinations thereof. Preferably, a lens carrier is used in conjunction with the transport means to transport the preform or lens without deforming or otherwise damaging it. Suitable carriers include, without limitation, single and multiple lens trays, grippers, and the like, and combinations thereof. Additionally, the preform and lenses may be manipulated at a station or a machine using conveyors, robotic means, indexing tables, grippers and the like, and combinations thereof

The process of the invention provides a great deal of flexibility in the production of lenses because at least two steps, preform production and unfinished lens fabrication, are used to provide the desired prescription, or refractive power. By permitting a portion of the prescription to be added in each of the at least two steps, combinations of preforms and molds may be used to produce a greater range of prescriptive lenses than permitted in current lens fabrication processes.

Further, the process of the invention results in a better reproducibility of the finished lens by controlling preform thickness and diameter to within about 100 microns, preform and mold accuracy to within about 10 microns, and preform and mold surface smoothness to within about 1 micron. Additionally, the process is one in which the optical preforms and molds are each held in a precise relationship relative to one another during curing, without the need for flexible parts, such as gaskets. Thus, precision placement of optical features on the mold with respect to the preform, such as a reading zone, cylinder axis, and the like is permitted.

The process of the invention also permits customization of the lens to a level not achievable using conventional methods of lens production. For example, a preform having specifically designed convex and concave surfaces made of one material of a first refractive index may be used in conjunction with the casting of a material of a second refractive index. Due to the refractive index difference between the preform and the cast resin, the finished lens may incorporate multiple, optically active surfaces designed to impart specific optical parameters for a wearer.

Finally, the process of the invention permits customization of lenses to specific prescriptions without the need for additional inserts or molds. For example, an optical preform may be cut so that the geometric and optical centers do not coincide providing for different pupillary distances. Alternatively, a preform may be positioned with respect to a mold during casting to provide for a prescribed prism or edge thickness balancing. As yet another alternative, a preform may be displaced laterally or rotated with respect to a mold so that misalignment of optical features occurs. Such displacement or rotation permits one or more of unwanted astigmatism or distortion minimization, channel length customization, prism addition, or fitting point customization. Additionally, rotation of the preform with respect to a mold can be used to provide both left and right lenses using the same preform and mold.

### Preform Production

Each of the optical preforms used in the processes of the invention preferably has a front surface, typically convex, and a back surface, typically concave, one or both of which surfaces have at least a first refractive power. By "front surface" is meant the surface that is nearest the object being viewed through a worn lens in which the preform is used. By "back surface" is meant the surface that would be nearest the wearer's eye. The first refractive power may be all, or a portion, of the distance vision, near vision, intermediate vision, cylinder power or prescribed prismatic power desired for the finished lens, or a combination thereof. Preferably, the first refractive power, is a portion of the distance vision refractive power desired for the specific lens to be formed from the preform. In this preferred embodiment, additionally one or both of the preform's surfaces may have all or a portion of the near vision refractive power, intermediate vision refractive power, cylinder power, and combinations thereof.

Preferred preforms for use in the invention are disclosed in United States Patent No. 5,907,386. Additional preforms useful in the invention are disclosed in the U.S. Application Serial No. 09/270,390 (Attorney Docket No. INT-70), incorporated herein in its entirety by reference. The disclosed preforms provide a portion of the distance power of the desired lens and, in the unfinished lens fabrication step (102), additional distance power is added in one or more layers to the preform to obtain the desired final distance prescription for the lens. One ordinarily skilled in the art will recognize that the distribution of distance power between the preform and layer or layers added to the preform may be any of a variety of increments. Preferably, the following preform distance powers and added distance powers are used: about +2 to about + 5 and added power of about 0 to about +6 diopters; about 0 to about +3 diopters and added power of about 0 to about +6 diopters; about -1 to about +1 diopters and added power of about -6 to about +6; and -1 to about -5 and added power of about 0 to about -6 diopters.

It is more preferred that the distance power of the preform be selected from the following powers: about +3.50 diopters; about +1.50 diopters; about 0.00 diopters; or about -3.00 diopters. Further, it is preferred that, for these preform powers, the back surface of the preform be of one of the following base curvatures: about -2.50 diopters; about -4.00 diopters; about -5.50 diopters; or about -7.00 diopters. Similarly, although any distance power increment may be added to the preform, it is preferred that the added layer be added onto the front surface for the specific preform and back surface curvature be as set forth in Table 1. All values in Table 1 are to be assumed to be proceeded by the phrase "about."

**Table 1**

| Optical Preform Power (diopters) | Back Surface Base Curve (diopters) | Front Surface Added Distance Power (diopters) |
|---|---|---|
| +3.50 D | -2.50 D | +0.75 to +2.50 D |
| +1.50 D | -4.00 D | +0.50 to +2.50 D |
| 0 D | -5.50 D | +1.75 to -2.75 D |
| -3.00 D | -7.00 D | 0 to -3.00 D |

More preferably, the preforms used in the invention have a spherical, progressive addition, regressive, or aspherical front surface and a progressive addition or regressive surface as the back surface, which progressive or regressive surface may additionally have cylinder power. By "progressive addition surface" is meant a continuous, aspheric surface having far and near vision zones and a zone of increasing dioptric power connecting the far and near vision zones. By "regressive surface" is meant a continuous, aspheric surface having a far and near vision zone and a zone of decreasing dioptric power connecting the far and near vision zones. Most preferably, the preforms used in the invention have a spherical front surface and a progressive addition surface as the back surface, which progressive addition surface may include cylinder power.

In cases in which preforms having toric progressive back surfaces are used, preferably, the surfaces are produced so that a toric progressive surface is not provided at each cylinder axis degree. Rather, a cylinder axis within a set number of degrees of the lens wearer's required cylinder axis is used, preferably within about 0 to about 25 degrees, preferably about 0 to about 20 degrees, more preferably about 0 to about 11 degrees of the required cylinder axis desired for the lens' wearer. Preferably, the cylinder axis orientation selected is one of a group of orientations that is less than the 180 possible orientations, more preferably the axis being one of a group of about 20 orientations, and most preferably the orientation is at 9, 27, 45, 63, 81, 99, 117, 153, or 171 relative to the three o'clock position.

For example, a preform with a concave progressive addition surface may be provided with a cylinder axis at 9, 27, 45, 63, 81, 99,117,153, or 171 degrees relative to the three o'clock position on the surface and the near vision zone center is located along the 270 degree axis, the six o'clock position. In unfinished lens fabrication step (102), a progressive addition surface is cast onto the front preform surface, preferably by using a mold suitable for casting the surface. The mold's near vision zone may be provided at any convenient position but preferably is at a position that is aligned with the near viewing pupil position of the lens wearer. Typically, this position will be on either side of the 270 degree axis, the 6 o'clock position, of the mold depending on whether a left or right lens is being fabricated. Preferably, the position is within about 0 to about 20, more preferably about 5 to about 15, most preferably about 8 to about 10 degrees on either side of the 270 degree axis. The preform preferably is formed with a mark, such as a scribe mark or ink, or notched, so as to designate the location of the near vision zone, facilitating orientation of the preform in relation to a mold in subsequent manufacturing steps.

The preform is positioned, or rotated, in relation to the mold used to cast the convex surface selected, so that the cylinder axis of the resulting lens will be that required by the lens wearer. For example, if the lens wearer's required cylinder axis is 180 degrees for the left eye and the preform has a back surface cylinder power that is at the 9 degree axis, with the near vision zone at 270 degrees, the preform is rotated so that its back surface cylinder axis falls along a mold's 180 degree axis and a surface is then cast onto the preform using the mold.

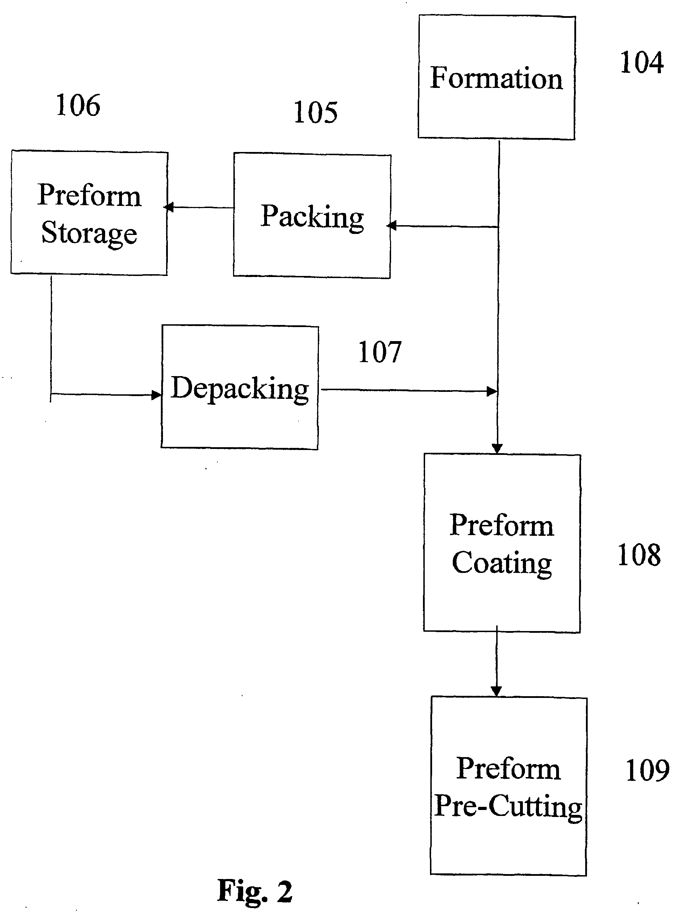

Referring to FIG. 2, the substeps and optional substeps of the preform production portion of the process are shown in flow diagram form. Preform formation (104) may be carried out by any convenient manner such as by casting, thermoforming or molding. For efficiency and quality of preforms produced, and to achieve the preferred preform thickness and diameter of about 100 microns, preform accuracy of about 10 microns, and surface smoothness of about 1 micron, injection-compression molding, or injection molding using coining along with precision inserts is used. More preferably, injection molding using coining and precision inserts is used. Suitable injection molding methods using coining are known. In such processes, a suitable material is heated to or above its softening temperature, injected into a mold cavity and the formed preform is ejected or removed from the mold.

Materials suitable for use in forming the preform are any materials capable of use as a spectacle lens material. Illustrative materials include, without limitation, polycarbonates, such as bisphenol A polycarbonates, allyl diglycol carbonates, such as diethylene glycol bisallyl carbonate (CR-39™), allylic esters, such as triallyl cyanurate, triallyl phosphate and triallyl citrate, acrylic esters, acrylates, methacrylates, such as methyl- ethyl- and butyl methacrylates and acrylates, styrenics, polyesters, and the like and combinations thereof. Additionally, the preform may be formed from one or more of the phosphine oxides disclosed in U.S. Patent No. 6,008,299.

Preferably the preforms are formed with associated structures, such as tabs along the preform perimeter, to facilitate ejection and subsequent handling and marks or notches to facilitate orientation during downstream processing. The molded preforms are removed from the injection mold by a robot and transferred to a degating station where the tabs are removed using any suitable means including, without limitation, by a heated knife, a laser, a water jet, or the like, and combinations thereof.

The degated preform is preferably transferred by a transport means to an automated inspection station for optical inspection, cosmetic inspection, or both. Any suitable inspection means may be used to inspect the preform, such as the commercially available Pro-Laser LENSPECTOR™ system. Preforms found to be within desired tolerances and, thus, passing inspection may either continue along the production line for further processing or preferably are moved by transport means to a packaging station. At this station, the preform is packed (105) by being placed in a suitable package for storage, such as a polymetic package thermally sealed by a plastic lidstock. The packaged preform is then stored (106) by being fed into a storage unit. Packed and stored preforms subsequently may be depacked (107) manually or, preferably, by any known automated means.

Formed preforms, or stored preforms that are depacked (107) are transported by transport means to the automated area at which unfinished lens fabrication (102) is carried out. Optionally and preferably, the preform is coated (108) on one or more surfaces with any of a variety of desirable coatings before being sent to the unfinished lens fabrication step (102). More preferably, the back surface of the preform is coated. Suitable coatings include, without limitation, tintable or non-tintable scratch resistant coatings, primer coatings, photochromic coatings, polarizing coatings, or a combination thereof. One ordinarily skilled in the art will recognize that the coatings stage may require that the coatings be applied using any convenient means including, without limitation, spin-coating, dip-coating, or the like. Preferably, spin-coating is used. The coated preform may be cured by any of a variety of means including, without limitation, radiation cure, thermal cure, visible light cure, and the like, and combinations thereof Most preferably, the back preform surface is spin-coated with a scratch resistant coating and then cured.

In a preferred method, the back surface coating machine contains multiple stations that load, clean, dry, prime, spin, cure, coat and UV cure a scratch resistant coat. Suitable machines for carrying out this type of coating process, such as the ASC 500 available from Calmation, Inc. of Simi Valley, California are commercially available.

The coated and uncoated preforms optionally, and preferably, are pre-cut (109) before entering unfinished lens fabrication. The preform may be pre-cut to any shape capable of reducing the preform diameter and relocating its geometric center to create an effective diameter for the preform based on the finished lens to be formed. By "effective diameter" is meant the smallest circle, centered at the fitting point, that can encompass the frame size desired for the lens. The pre-cutting ultimately permits formation of a finished lens with a minimal thickness. The shape to which the preform is cut to achieve this will depend upon monocular distance pupillary distance, frame eye size, effective diameter, and frame shape. Additionally, in the pre-cutting step, an orientation mark is provided in the preform for use in the unfinished lens fabrication step, which mark is at the same angular orientation as the mark or notch of the original preform.

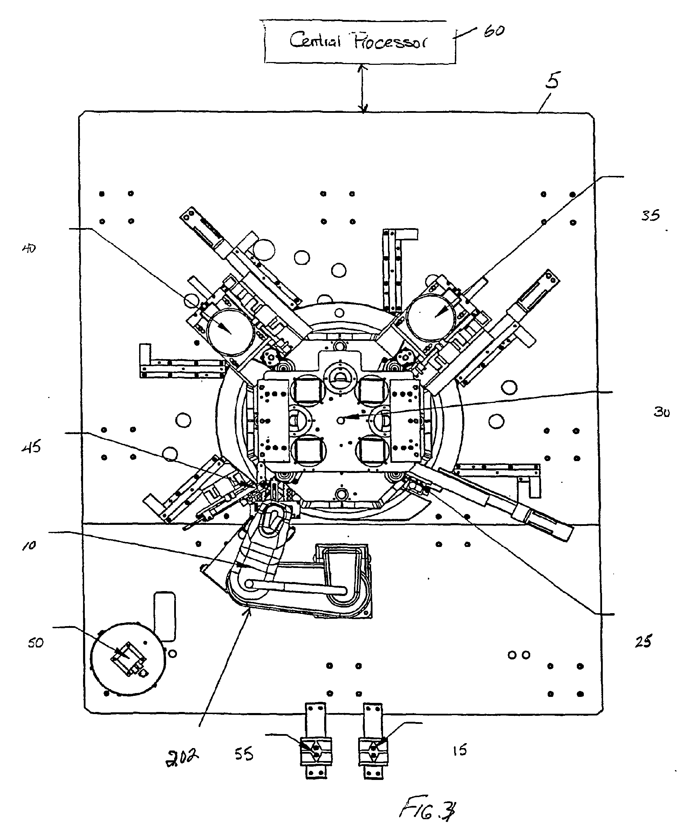

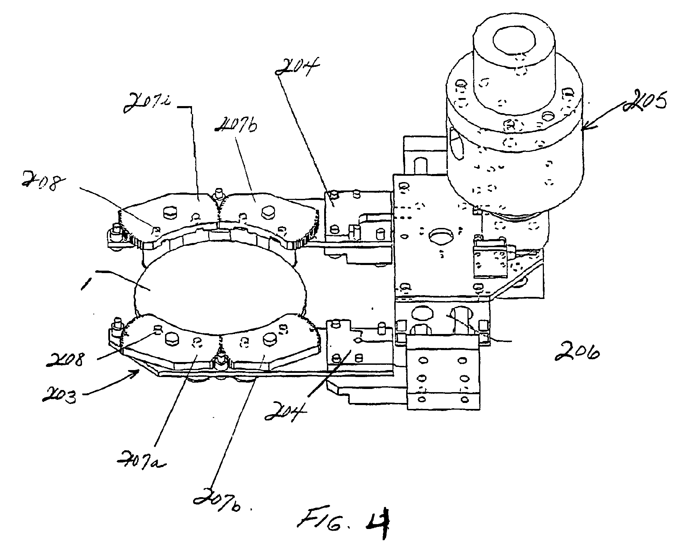

A preferred pre-cutter for use in the process is disclosed in the U.S. Application Serial No. 09/468,467 and entitled "Pre-Cutter and Edger Machine" (Attorney Docket INT-81). FIG. 3 is a top view of this preferred pre-cutter apparatus 5 for pre-cutting of preforms. Pre-cutter 5: locates the geometrical center of the preform by mechanical means; detects the height of the preform and an orientation mark on the back surface proximate the edge; cuts the preform concentric or eccentric in relation to the geometrical center to a desired shape, diameter, or both; transposes the orientation mark onto the new edge; cleans and dries the preform; and verifies the new diameter of the preform. Pre-cutter 5 includes transfer means 10, such as a mechanical arm, or robot having a pivot arm 202 and a gripper 203, including two fingers 204, as shown in FIG. 4. Preferably, the gripper is at least two-sided (not shown) and capable of grasping two or more lenses. Transfer means 10 is connected to pivot arm 202 by mount 205. An opening means, such as air cylinder 206, is used to open and close the gripper by displacing fingers 204 in a horizontal plane with respect to one another about preform 1.

As shown in FIG. 3, machine 5 has infeed station 15, scanning station 25, coarse grinding station 35, fine grinding station 40, verification and notching station 45, cleaning and drying station 50, and outfeed station 55. A preform is placed on a platform at infeed station 15 manually or, preferably, by robotic or transfer means. Sensors generate a signal that is transmitted to a remotely, or locally, disposed central processor 60 indicating that the preform is placed at the infeed station 15. Upon receipt from processor 60 an indication from the sensors that the lens is loaded at the infeed station, a signal is generated indicating that the preform is ready to be pre-cut.

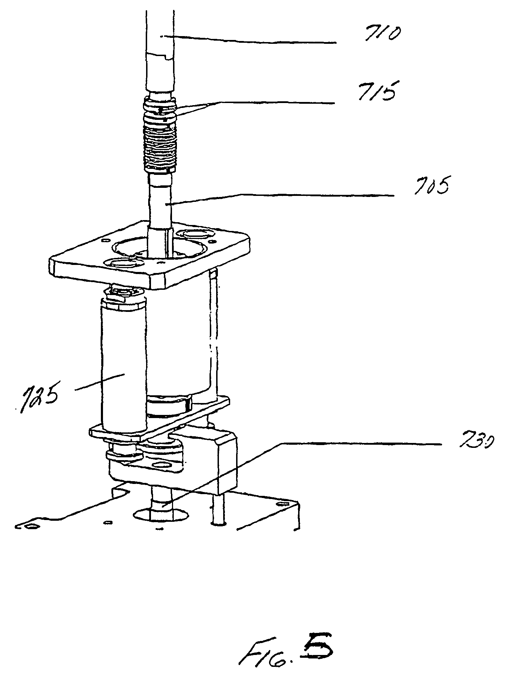

Transfer means 10 loads the preform onto the platform shown in FIG. 5. The preform is held between pads 715 by a vertically displaceable, such as by air, cylinder 730, support member 705 and stationary support member 710. Turntable 30 rotates the preform until it is positioned at scanning station 25 at which a probe scans the preform's front surface to determine its absolute height and a second probe scans the back surface to locate an orientation mark disposed on that surface. The preform is then rotated to coarse grinding station 35 at which a grinding wheel is used to grind the periphery of the preform to a specified diameter or shape, which may be selected from a memory device in the machine or entered via a keyboard. After grinding is complete, turntable 30 rotates the preform to fine grinding station 40 for final grinding. Preferably both grinding wheels are isolated in a containment means, such as an enclosure, along with the preform being ground, to contain debris generated by the grinding, which ground debris may be removed by a removal means including, without limitation, via water, air, or the like, or a combination thereof.

Turntable 30 rotates the preform to the verification and notching station 45 for diameter verification and cutting of a notch into the periphery at the previous location of the orientation mark. The preform is then downloaded from station 45 and moves to the cleaning and drying station 50 where the gripper is used to transfer the preform to a pair of vertically displaceable support members, similar to those shown in FIG. 5, but smaller. Both surfaces of the lens are sprayed with a suitable cleaning means, such as water, deionized water, air, and the like, or a combination thereof and the preform is spun to dry after which transfer means 10 moves the preform to outfeed station 50. The preform is then transported to the unfinished lens fabrication step (102).

### Unfinished Lens Fabrication:

In order to fabricate an unfinished lens of a specific refractive prescription, either a suitable preform is produced or a suitable preform is retrieved from storage for use and one or more prescriptive layers are cast onto the preform. By "prescriptive layer" is meant a layer that adds at least a second refractive power to the preform. The second refractive power may be a portion or all of the distance vision, near vision, intermediate vision, or cylinder refractive power, of the finished lens to be formed, or combinations thereof. Preferably, the second refractive power is a portion of the desired distance power. More preferably, the cast layer forms a progressive surface and most preferably, the progressive surface is formed on the preform's front surface.

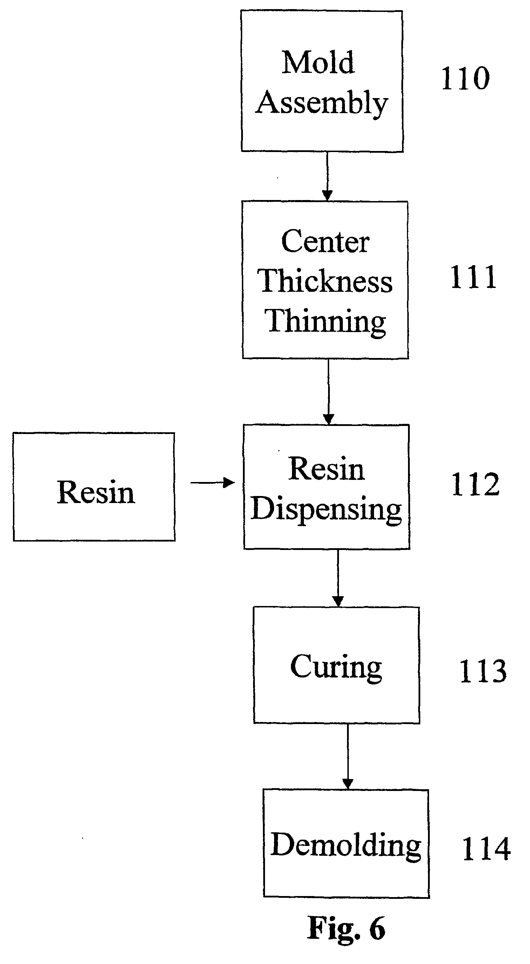

Referring to FIG. 6, the preform enters into the mold assembly step (110). This process step may, and preferably is, conducted on a made to order basis in which a manufacturing execution system receives a lens prescription to be produced and the appropriate preform and mold required are selected. The selected preform and mold are transferred to the lens casting machine. The preform and mold may be displaced and rotated in relationship to each other to produce the desired center thickness and to achieve optimal edge balancing. Methods for casting prescriptive layers onto a preform are disclosed in U.S. Patents Nos. 5,147,585, 5,178,800, 5,219,497, 5,316,702, 5,358,672, 5,480,600, 5,512,371, 5,531,940, 5,702,819, 5,793,465, 5,859,685, 5,861,934, and 5,907,386 and U.S. Application Serial Nos. 09/178,471, 09/270,390, and 09/315,477.

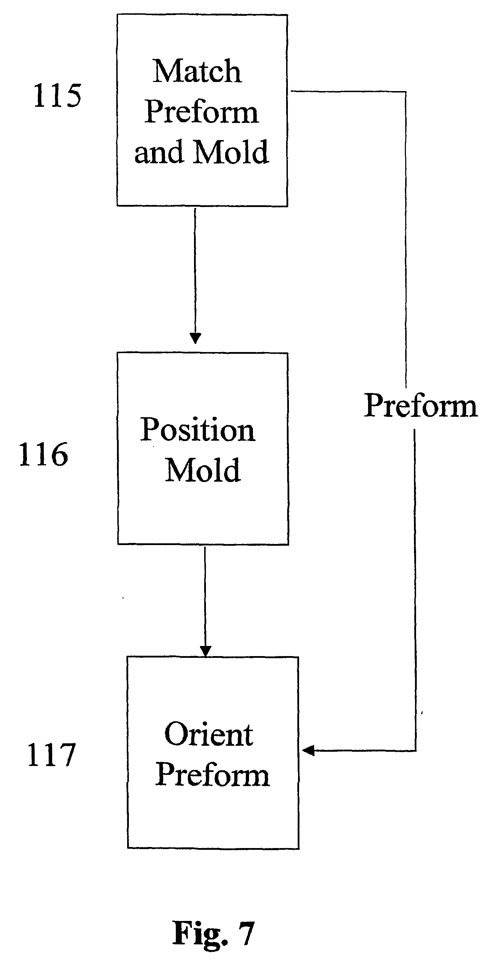

As more specifically shown in FIG. 7 in steps 115-117, once the preform and the mold are matched (115), the mold is positioned (116) in relation to the preform and the preform is oriented (117). The resulting position is determined by a number of factors including, without limitation, the desired amount of separation between the preform and mold during resin curing, the lateral displacement of the mold primary reference point to match the primary reference point of an off-center, pre-cut preform to minimize plus lens thickness, tilt of the mold relative to the preform to accommodate edge thickness balancing, rotation of the preform relative to the mold to account for the cylinder axis for astigmatic prescriptions, and rotation of the mold and preform for producing left and right lenses. The angular orientation of the mold to the perform may be adjusted so that the layer cast provides for a specific lens wearer's pupillary convergence or cylinder prescription. Further, the geometrical orientation of the mold to the preform may be adjusted to add prism or to produce a customized unfinished lens for use in a distinct frame size.

Positioning of the mold and preform are accomplished by use of a gimbal holder. Preferably, positioning is accomplished by placing the mold, using positioning means such as suction, in a fixture capable of gimbaling action. The required mold displacement and tilt are accomplished by servo motors.

Center thickening and thinning (111) provide for edge thickness balancing and center thickness control of the unfinished lens to be cast. In one preferred embodiment, edge thickness balancing is accomplished by touching the preform to the mold and tilting the mold so that the preform settles as deeply into the mold as possible without damage. Tilting of the mold preferably is accomplished about the optical center of the preform's concave surface or the alignment of the preform and mold optical center will be lost. It is a discovery of the invention that this method produces an approximately uniform edge thickness for a cast progressive lens. Additionally in this embodiment, center thickness control is achieved by the subsequent withdrawal of the preform vertically away from the mold surface by a predetermined distance to form the cavity into which the resin will be dispensed. One ordinarily skilled in the art will recognize that too much distance will increase the lens thickness to a cosmetically unacceptable level while too little will result in a cast layer with a non-uniform curing.

Once the desired mold-preform orientation is achieved a resin, meaning one or more of a mono- or polyfunctional monomer, an initiator, and combinations thereof is dispensed into the mold assembly (112), which resin is subsequently cured to form the cast prescriptive layer. Suitable resins for use in the process of the invention include, without limitation, those disclosed in United States Patent No. 5,470,892. Additional suitable monomers include, without limitation, allyl and bis(allyl) carbonates, such as diethylene glycol bis(allyl) carbonate, bisphenol A diallyl carbonate, and the like, acrylic acid, multi-functional acrylates and methacrylates, such as ethylene glycol diacrylate, tetraethylene glycol diacrylate, tripropylene glycol diacrylate, trimethylolpropane triacrylate, tetrahydrofurfuryl methacrylate, tetrahydrofurfuryl acrylate, hexanediolmethacrylate, methyl methacrylate, butyl methacrylate, propyl methacrylate, penterythritol tetraacrylate, urethane acrylates and methacrylates, styrene and styrene derivatives such as divinyl benzene, 4-vinyl anisole, various esters or maleic and itaconic acids, methacrylic and acrylic anhydrides and the like, and combinations thereof. Such monomers are commercially available or methods for their production are known.

Particularly useful monomers are those useful in forming lenses with high refractive indices. Illustrative of these monomers are bisphenol A diacrylates and dimethacrylates, ethoxylated bisphenol A diacrylates and dimethacrylates, acrylate and methacrylate esters of diglycidyl bisphenol A, epoxy acrylates and methacrylates, acrylates and methacrylates of tetrabromo bisphenol A, acrylates and methacrylates of bisphenol S, acrylate and methacrylate esters of diglycidyl tetrabromo bisphenol A, acrylate and methacrylate esters of diglycidyl tetrabromo bisphenol S, acrylate and methacrylate esters of tetrahydrofuran, and the like. The monomers may be used alone or in combination with one or more of the following: epoxy acrylates and methacrylates; ethoxylated phenoxy acrylates and methacrylates; isobornyl acrylates and methacrylates; divinyl benzene; benzyl acrylates and methacrylates; polyethylene glycol diacrylates and dimethacrylates; N-vinyl carbazole, and the like. A preferred formulation uses about 50 to about 80 weight percent of bisphenol A diacrylate, about 5 to about 40 weight percent of benzyl acrylate, about 2 to about 30 weight percent of tetrahydrofurfuryl acrylate and about 0.5 to about 50 weight percent of dipentaerythritol pentaacrylate.

The resin may be dispensed into the mold assembly by any convenient means. Preferably, the preform is withdrawn from the mold and the resin is dispensed into the mold cavity from a vessel, optionally and preferably in which the resin is heated to about or above about 40° C, more preferably about or above about the glass transition temperature, Tg, of the cured resin. Dispensing preferably occurs so as to allow for smooth, bubble-less flow into the mold cavity. The volume of resin dispensed into the cavity will be an amount effective to form the desired layer on the preform, which amount will depend on the resin selected, the parameters of the surface desired to be formed, and the size and shape of the surface on which the resin will be cast. Typically, the amount of resin used will be about 2 to about 20 g.

After the resin is dispensed into the mold cavity, the preform is again contacted with the mold and resin to form the mold assembly and the cast resin is cured (113) to form the unfinished lens by any suitable means including, without limitation, radiation cure, thermal cure, visible light cure, and combinations thereof. Preferably, ultra-violet cure is used, more preferably a two-stage UV cure in which the mold assembly is exposed to low intensity and then high intensity ultraviolet light. A preferred two-stage UV cure method is disclosed in the U.S. Patent Application Serial No. 09/468,973 entitled "Methods and Compositions for the Manufacture of Ophthalmic Lenses" (Attorney Docket No. INT-77).

For purposes of the invention, low intensity UV light is UV light with an intensity of about 0.5 to about 50, preferably about 1 to about 5 mW/cm². High intensity UV light is of an intensity of about 50 to about 2000, preferably 500 to about 1500 mW/cm². The wavelengths at which the exposures are carried out may be, and preferably are, the same. Suitable wavelengths are about 300 to about 450, preferably about 360 to about 400 nm. The time for the low intensity exposure will depend on the resin selected for casting onto the preform, the type and amount of initiator used, resin viscosity, the nature of the reactive groups, the thickness of the resin layer to be cast, and the intensity of the UV light. Generally, the total low intensity exposure time will be about 5 seconds to about 300 seconds, preferably about 60 seconds to about 120 seconds.

The low intensity exposure preferably is carried out in one step. However, some lens assemblies may require that the low intensity exposure be carried out in two or more steps using periods of non-exposure to, or shuttering of, the UV light of about 5 to about 60 seconds between each low intensity exposure. Preferably, periods of exposure of about 30 to about 60 seconds are alternated with non-exposure periods of about 5 to about 60 seconds. Subsequent to the termination of the low intensity exposure, the mold assembly is exposed to high intensity UV light under conditions suitable to complete through-cure of the resin. The same factors determinative for low intensity exposure time are determinative for the high intensity exposure time. Generally, the exposure time will be about 3 seconds to about 60 seconds, preferably about 5 seconds to about 15 seconds. The high intensity exposure may, and preferably is, carried out as a single, continuous exposure. However, the high intensity exposure also may be carried out using alternating periods of UV exposure and non-exposure periods. A total UV exposure, both low and high intensity, time of about 150 or less seconds, preferably about 130 seconds or less is used.

The low and high intensity polymerization steps may be carried out at a temperature between about 10 to about 50° C and atmospheric pressure, preferably at ambient temperature. More preferably, the polymerization process is carried out at about or above about 40° C, more preferably about or above about the Tg of the cured resin. Heating may be accomplished by any convenient means including, without limitation, use of an oven, heat circulator, or combination thereof. Polymerization at the preferred temperature is also achieved by any convenient means including, without limitation, maintaining the cure chamber at the preferred temperature by use of forced air. In a preferred embodiment, the high intensity UV cure is carried out under an atmosphere of about 80 to about 100 percent nitrogen or about 0.35 to about 100 percent carbon dioxide.

The low and high intensity UV exposures may be carried out in any fashion that permits the even distribution of the light through the mold assembly. The mold half used in the mold assembly may be made of any suitable material capable of permitting UV light transmission including, without limitation, glass or plastic.

Sources of low intensity UV light include, without limitation, mercury and xenon arc lamps, fluorescent-type bulbs, or the like, and combinations thereof. High intensity UV light sources include, without limitation, mercury, xenon, and mercury-xenon arc lamps, FUSION™ microwave-ignited lamps, or the like, and combinations thereof. Suitable sources for the UV light used in the invention are commercially available.

The layer or layers cast onto the preform may provide any of a variety of prescriptive powers including, without limitation, distance, near intermediate, and cylinder power, and combinations thereof. Additionally, the preform may be produced so that the preform surface or surfaces onto which the layer or layers are cast provides one or more of these prescriptive powers. However, such use of the preform layer adjacent to the cast layer requires that the preform and cast layer materials be of different refractive indices. Further, the use of the adjacent preform surface to provide prescriptive power may be limited by the fact that such use may render the surface visible. This visibility may be offset by coating the preform surface with a material of a refractive index that is intermediate between that of the surface and the cast layer. In this case, the coating refractive index preferably is the geometric mean of the indices of the preform and cast layer materials. Methods for providing preforms with cast layers of varying refractive indices are disclosed in U.S. Patent Nos. 5,847,803, 5,861,934, and 5,907,386.

Following curing, the unfinished lens is demolded (114) by any convenient demolding means. Preferably, demolding is accomplished by chilling the mold assembly such as by using cold bladders, to separate the unfinished lens from the mold.

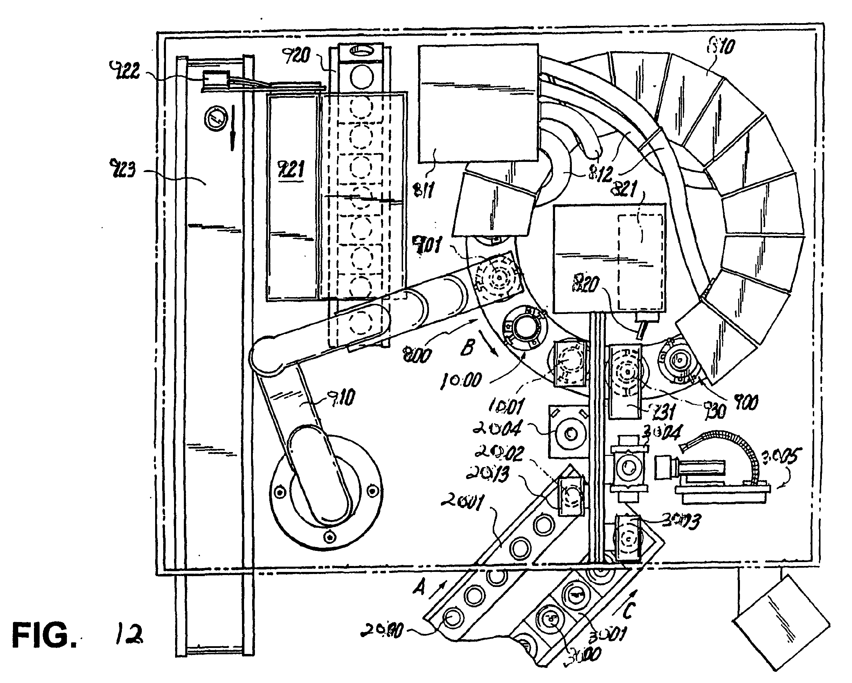

A preferred machine for performing steps 110 through 114 is the lens casting machine disclosed in the U.S. Patent Application entitled "Apparatus for Automated Ophthalmic Lens Fabrication" (Attorney Docket No. INT 87) filed concurrently herewith. Referring to FIG. 12, an embodiment of the machine is shown in which indexing dial 800 is provided in which complete mold assemblies 900 are formed, resin dispensed into the mold assembly, and the complete assembly carried through a means for curing. Alternatives to indexing dial 800 means of indexing the mold assemblies include, without limitation, rotary indexing dials, linear indexing tables, and combinations thereof

Preferably, the curing means 810 (not depicted in detail) is a cure chamber in which UV light is supplied. After completion of the curing portion, continued indexing of indexing dial 800 illustrated by arrow B causes a complete mold assembly 901, now with a cured resin, to be placed under robotic arm, 910 that disengages a gimbal fixture 1000, from the remainder of the assembly. The mold and adhered lens may be placed on conveyor 920 carrying the parts through a chiller and progressive cooling tunnel 921. Alternatively, the chiller and tunnel may be a part of the indexing dial. After passing through the cooling tunnel, a jaw apparatus 922 moves the now chilled mold and lens to a delivery conveyor 923. The lens is removed from the mold for further processing and the mold is recycled through the apparatus.

The molds 2000 are removed from the delivery conveyor or indexing dial (by means not shown) and placed onto a staging belt 2001 to repeat the process. As the staging belt 2001 moves in the direction shown by arrow A, one mold, preferably a glass mold, 2000 is placed under suction apparatus 2013 raising the mold 2000 and placing it on photo turntable 2004 where it is optically scanned and rotated for proper orientation in accordance with the prescription of the lens desired. While a suction apparatus is illustrated here and elsewhere in the apparatus, other means well known in the art can be used for movement and placement of the glass mold. Mold 2000 is then carried to indexing dial 800 and placed into an empty gimbal fixture 1001 which has moved from the position where it was separated from other portions of the mold assembly. Staging belt 2001 and dial 800 are indexed, rather than moved continuously so that various portions of the apparatus are in alignment at the same time to allow the possibility of more than one operation at each indexing step.

In addition to staging belt 2001, there may be a second staging belt 3001 on which preforms 3000 are conveyed in direction C and indexed under suction apparatus 3003. The preform is carried by the suction apparatus to preform turntable 3004 which, employing the strobe and camera 3005, orient the preform so that it will be in the proper position relative to the mold with which it will be matched in the complete mold assembly 900. Alternatively, the indexing dial may be configured to permit placement of the preform onto the dial and orientation of the preform on the dial. In the embodiment depicted, preform gripper 930 is placed in association with preform 3000 on turntable 3004 and firmly grips it. Preferred for use is a suction gripper although other grippers, such a 3-finger and diaphragm, may also be used.

A robotic arm (only a portion of which is shown) moves the gripper with the suction-attached preform to a position over the gimbal fixture 1001. Employing means not illustrated in FIG. 12, preform gripper 930 with attached preform 3000 is lowered by means of a servo motor into the gimbal assembly 1001 until the furthest extended portion of the preform touches the mold at which point a signal is generated. The gimbal rings are appropriately positioned and the gripper and preform raised out of the gimbal fixture and the desired amount of resin delivered into the mold by any appropriate means. As illustrated, retractable outlet 820 may be used to deliver the resin from the reservoir 821 into the mold. The preform and gripper are then lowered into the gimbal fixture 1001, the preform 3000 being spaced a selected number of microns, preferably about 20 to about 200, preferably about 50 to about 100 microns, from the mold 2000. The gimbal fixture 1001 is then locked onto the preform gripper 930 to form the complete mold assembly 900 which is processed as above-described.

The mold may be a mold without a ring or holder, a mold fixed into a ring horizontally, a mold fixed into a ring with a predetermined tilt, or a mold mechanically mounted into the ring. In a preferred embodiment, the mold is mechanically mounted in the ring or holder horizontally.

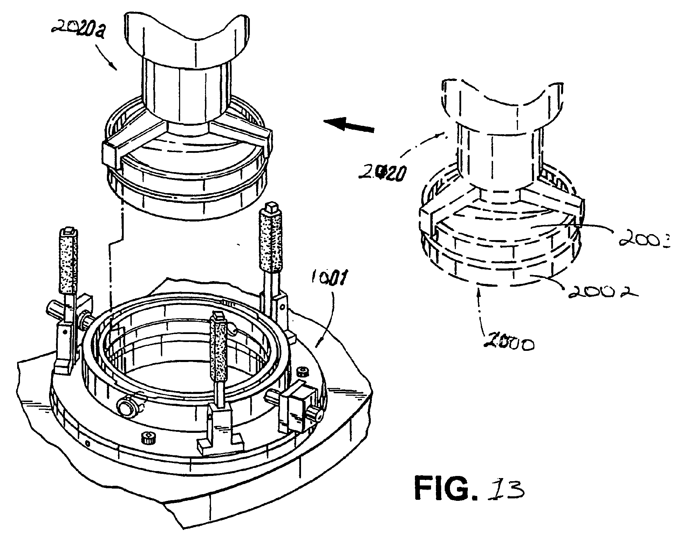

FIG. 13 illustrates a glass mold 2000 that includes holder 2002 and concave glass 2003 in which the resin molding is carried out. Concave mold 2003 is held into the holder 2002 using ridges (not shown). The mold has shoulders (not shown) allowing it to be placed and supported in an empty gimbal fixture 1001. An opening (not shown) is employed in the mold to properly orient mold 2000 at photo turntable 2004 in accordance with the prescription that the mold is to form in the resin being applied to the preform. The mold successively is moved to a position above the photo turntable 2004 and appropriate signals are provide by a sensing means working in conjunction with the mold opening to allow for proper alignment of the mold. The alignment is accomplished by rotation of the mold. The aligned mold 2000 is then lifted by three-arm gripper 2020 moving to position 2020a in FIG. 13 above and aligned with an empty gimbal assembly 1001. Other gripper types, such as diaphragm and vacuum grippers alternatively may be used.

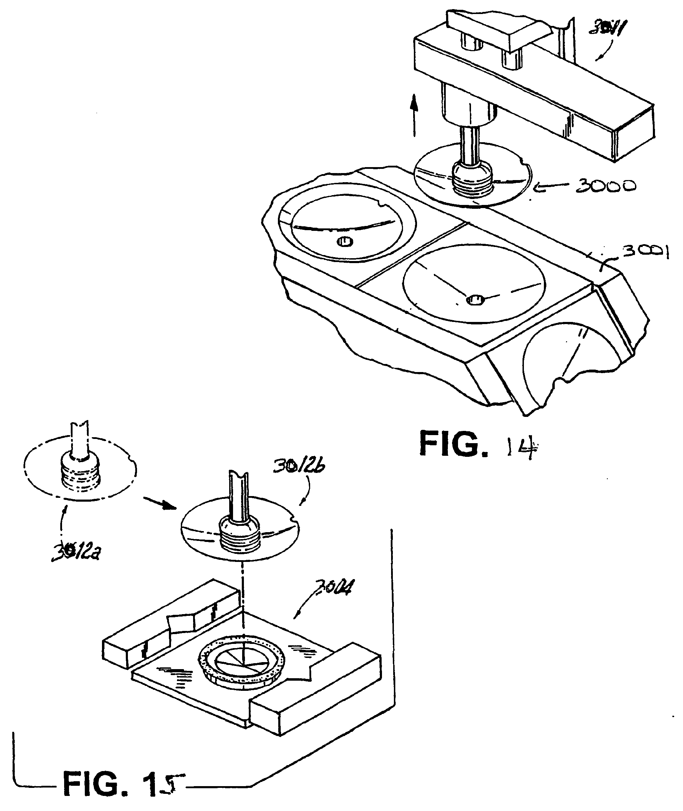

The preform, and the apparatus used to transport and orient it for ultimate insertion into the complete mold assembly is oriented by notching, preferably, the preform edge, placing a bump on the edge, or scribing or inking a mark on the edge. The preform 3000 may be picked up from staging belt 3001 and raised by any suitable means such as the retracting suction apparatus 301 as shown in FIG. 14 and moved from position 3012a to 3012b as shown in FIG. 15. The preform is then lowered to the preform turntable 3004 and retracting apparatus 3012 is disconnected from preform 3000.

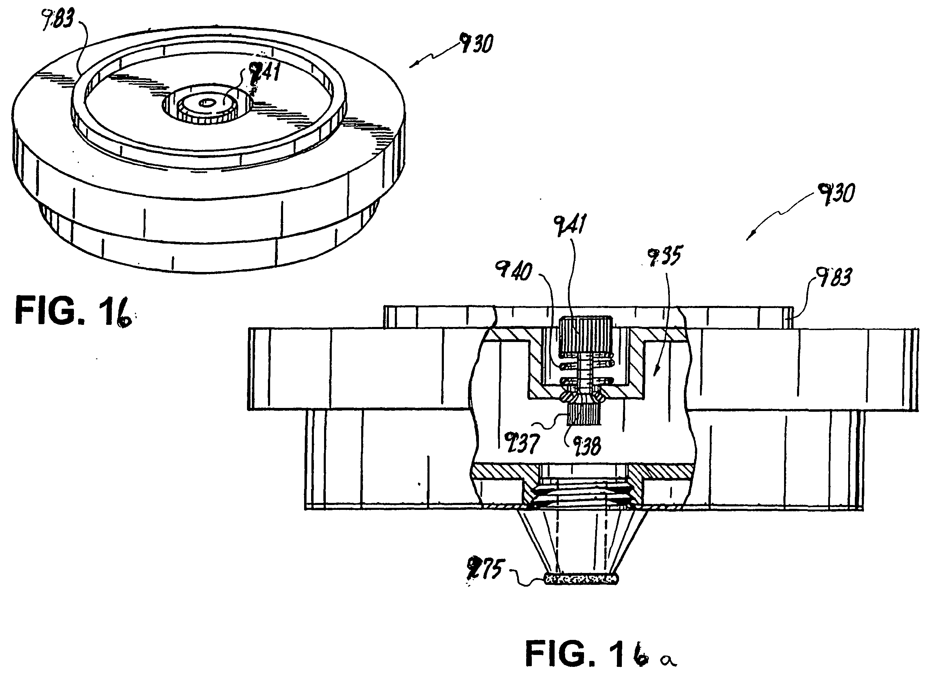

A mechanical probe, such as a strobe and camera, is moved forward, the strobe acting through a prism to control rotation of preform 3000 until the appropriate orientation is obtained based on the notch or mark. In order to lock preform 3000 into place without damage and to provide means for completing assembly of the complete mold assembly 900, a preform gripper which may be used is preferably a vacuum gripper. A preform gripper embodiment is shown in FIGs. 16 and 16a, which preform gripper interior has chamber 935. Chamfered screw 937 is held in place in a sealing portion 938 of the chamber 935 by the action of spring member 940, acting on knurled nut 941. O-ring 975, placed in the bottom of preform gripper 930 can be lowered to be placed against preform 3000 held in preform turntable 3004.

A means for moving the preform gripper horizontally and vertically, such as a robotic arm, makes contact with shoulder 983 formed on upper section 960 of the preform gripper and the member is moved upwardly. Preform gripper 930 is then placed over the properly oriented preform and the gripper is then moved downwardly until O-ring 975 contacts the preform. A rod within the robotic arm depresses the knurled nut 941 against the spring 940, thus moving chamfered screw 937 away from chamfer 938 and a vacuum is drawn, drawing preform 3000 against O-ring 975. The rod is withdrawn, allowing spring 940 to move against knurled nut 941 closing the opening through the movement of the chamfered screw 937. A vacuum is held in chamber 935 holding the preform against the O-ring. The entire assembly is then moved upwardly with retractor legs (not shown) held against shoulder 983 causing preform gripper 930 with the attached preform to move upwardly. The robotic arm is moved out of the way and a gripping apparatus, such as a three jaw apparatus, grasps preform gripper 930 with the attached preform 3000. This assembly is then moved from a position over the preform turntable to a position over gimbal fixture 1001.

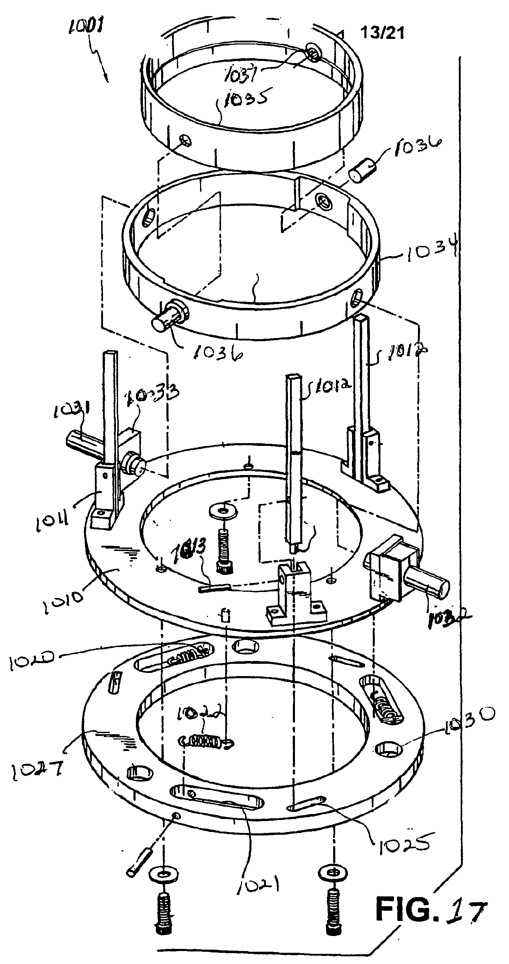

An exploded view of the empty gimbal fixture is illustrated in FIG. 17 and includes a platform 1010 on which are mounted three identical pedestals 1011; identical legs 1012 are pivotably held in each pedestal by a pin 1013 allowing movement of the legs to a position where legs 1012 are essentially upright, or to a position where the upper portion of the lens moves away from the center of the empty gimbal fixture. The upper portion of each leg may be and preferably is covered by a rubber grommet (not shown) or similar device having sufficient friction to hold another metallic part in place. A portion of each of the legs passes through plate 1010 and into protected chamber 1021, which portion is attached by spring 1022 to a firmly mounted post 1020. Extended members (not shown) move within slots 1026 formed in plate 1027 forming chamber 1021 along with plate 1010. These extended members 1025 are screwed in from the top.

Plate 1027 is provided with three opening s 1030. A rotatable member is mounted on indexing dial 800 below the point where the complete mold assemblies are formed. At the point where the preform is to be placed into the gimbal fixture, this rotatable member is moved in a direction to force members 1025 along slots 1026 against the action of spring 1020 causing legs 1012 to pivot outwardly providing free clearance for preform gripper 930.

Two additional pedestals 1035 are attached to plate 1010. Axles 1031 and 1-32 pass through pedestals 1033 and are firmly attached to outer ring 1034 of a gimbal formed on the gimbal fixture 1000. Each pedestal 1033 includes a braking mechanism, well-known in the art, to arrest rotation of the gimbal outer ring at an appropriate point and cause it to remain in place. Inner gimbal 1035 pivots on axes 1036 passing through outer ring 1034 and through inner ring 1035. Spring members 1037 are provided on the inner ring to arrest the rotational motion of the inner ring at the appropriate point.

The gimbal fixture with the mold in place is indexed forward to the position where preform gripper 930 is directly over it and the jaw apparatus now releases it so that it falls by gravity, or is driven by a servo motor (not shown) to a point where the apex of the preform touches the glass mold. The jaw apparatus may be equipped with a measuring means such as a load cell, a counter balance, the feedback current of a driving motor, or optical deformation (not shown) that measures the force applied to the mold at touch point. An electrical feedback mechanism (not shown) raises the jaw apparatus when the measuring means reaches a critical value. Preferably, this value is such that a 75 micron gap is left between the preform and the mold for all preforms, and it is set so that the deforming of the preform due to the force is less than about 0. This actuates a servo mechanism (not shown) so that when the gripper is again lowered, the desired spacing will remain between the preform 3000 and the mold 2000.

In addition, the contacting of the preform and the mold causes rotation of the gimbal rings to provide proper orientation of the mold. The preform gripper with the preform attached is raised and the resin allowed to flow into the mold from retractable outlet 820. The gripper again is lowered descending to such a point that the desired spacing is left between the preform and the mold. The rotatable member now rotates to cause legs 1012 to move inwardly and assume a position firmly seated against preform gripper 930 and maintaining the spacing between the preform and the mold.

At this point, mold assembly 900 is completed and is indexed into cure chamber 810 wherein it is acted on by UV radiation to cure the resin. Heat may be applied to or withdrawn from the chamber by any convenient means. The chamber preferably is enclosed (not shown) enabling it to be thermostatted within a desired temperature range. For example, the entire chamber may be divided into two or more thermostatted zones, each of which is separately controlled to allow for the admission of air. Indexing continues until a completed mold assembly reaches position 901 where means, such as robotic arm 910, are provided to lift the preform gripper/preform assembly and the mold from the indexing dial 800. The cured resin adheres to the mold and the mold is removed along with the other portions. The robotic arm moves the assembly over conveyor belt 920 where the vacuum within chamber 936 is released allowing separation of preform gripper 930 and preform 3000. The gripper device is retained and returned to a position to be employed in gripping another preform over preform turntable 3004.

The joined preform and mold remain on conveyor 920 for separation, preferably by chilling to a temperature of about -14° C, chilled air being directed against the combined members by a bladder, recycling chilled air through a chamber having inlet and outlet ducts. Other means of chilling, such as submersion in cold liquid or blown cold air may also be used. The mold and lens separate from each other and, at the end of the conveyor, are picked up by a gripper and moved to a discharge conveyor. The chilled preform is removed, as by a suction member, from the mold and the mold is returned to the staging belt. The lens is sent for further processing. Alternatively, the chilling and mold separation may take place on an appropriately configured indexing table, eliminating the need for conveyor 920.

The mold or molds separated from the preform, preferably are cleaned by any convenient means for re-use in the process. More preferably, the molds are steam cleaned as disclosed in U.S. Application Serial No. 09/328,629.

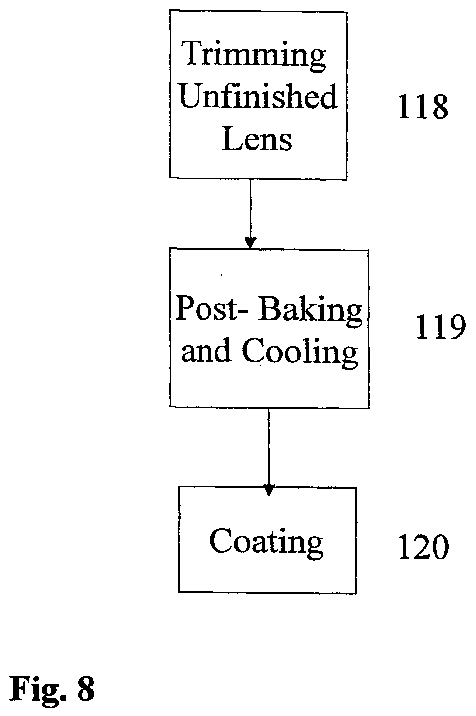

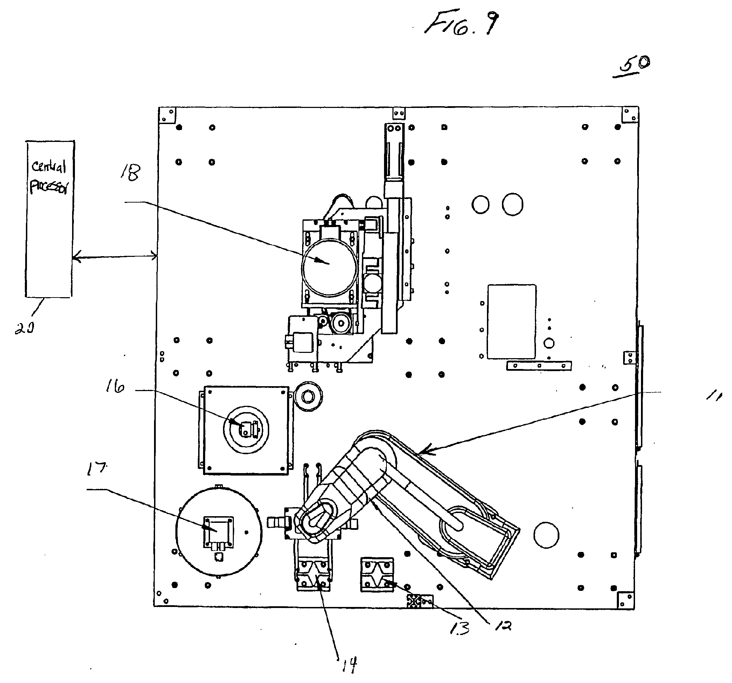

Referring to FIG. 8, prior to the lens proceeding to the finishing step, the unfinished lens preferably undergo any of a number of steps including trimming (118), post-baking (119), and coating (120). The unfinished lenses may be trimmed (118) of excess resin. Any known apparatus for performing such trimming may be used. Preferably, the auto-trimmer of FIG. 9 is used, which is the subject of the U.S. Application Serial No. 09/468,974 entitled "Automatic Trimmer Machine" (Attorney Docket No. INT-82).

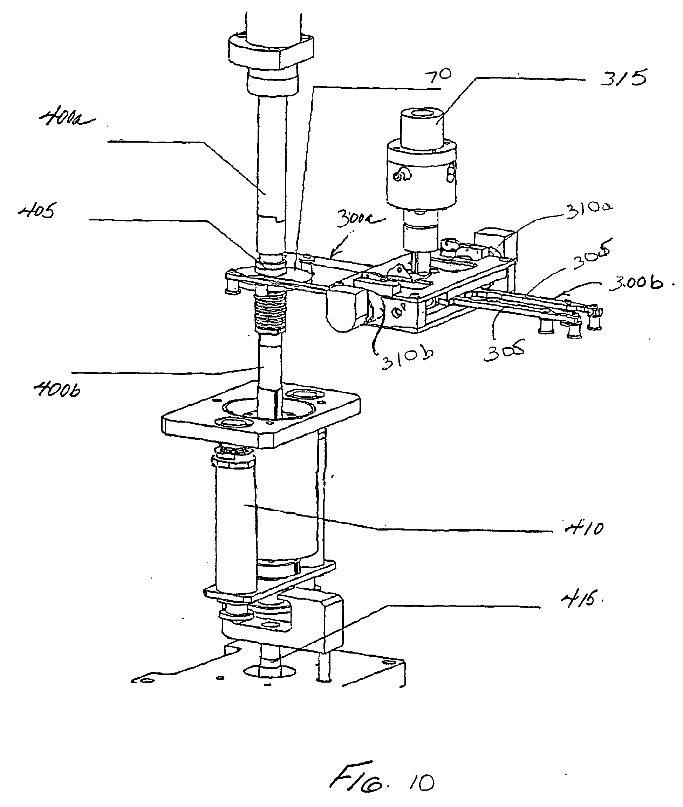

Figure 9 is top view of an automatic trimming machine 50 that locates the geometrical center of the unfinished lens, trims the flash resin from the outer periphery of the lens to a selected diameter, cleans and dries the lens, and verifies the diameter of the lens. Automatic trimming machine 50 includes a transfer means 11, such as a mechanical arm or robot having a pivot arm 12. Transfer means 11 preferably is duo-sided as shown in Figure 10, or more preferably multi-sided. As shown in Figure 10, two grippers 300a, 300b capable of grasping two lenses are present. The grippers are connected to the pivot arm 12 by a mount 315 and are displaceable along the z axis. Each gripper 300a, 300b has two fingers 305 that are displaceable with respect to one another in a horizontal plane between an open position and a closed position by motors 310a, 310b, respectively. Transfer means 11 is used to load and download an unfinished lens and to transport or move an optic between operating stations including an infeed station 13, an imaging station 16, a grinding station 18, a cleaning and drying station 17, and an outfeed station 14.

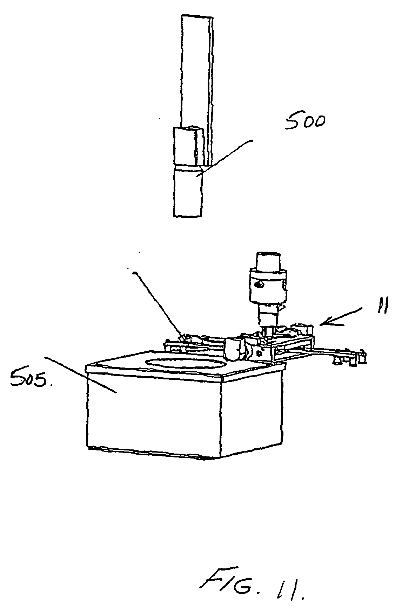

The unfinished lens is placed, either manually or preferably by robotic means, on a platform at the infeed station 13. Sensors (not shown) in the platform generate a signal to a remote or local central processor 20 indicating that the lens has been placed at the infeed station 13. A recipe is selected from a plurality of prescribed recipes stored in a memory of the processor 20. A signal is generated by the processor 20 in response to selection of a recipe indicating that the lens is ready to be processed. Transfer means 11 picks up the lens from the platform of the infeed station 13 and moves the optic to the imaging station 16 between a lighting source 505 and a charge coupled device 500 that takes an image of the lens to determine its center, as shown in Figure 11.

In a preferred embodiment, the center of the lens is determined using conventional dark field light to make the edge of the lens shine. Specifically, after casting, the outer edge of the lens is irregular in shape due to the excess or flash resin. However, when the lens is illuminated by the light a substantially round inner edge is visible. The substantially round inner edge is used as a reference to determine the center of the lens. Alternatively, mechanical probes may be positioned around the periphery of the lens to determine the center using known techniques. Once the center of the lens has been located, central processor 20 computes the distance necessary to move the optic so that it is concentric with the platform.

Next, the transfer means 11 moves the lens from the imaging station 16 to the grinding station 18, as shown in Figure 10. At the grinding station 18 the lens to be cleaned is positioned between pads 405 and held in place by a pair of vertically displaced support members 400a, 400b. Specifically, during loading of the lens on to the platform the lower support member 400b is lowered out of the way via an air cylinder 415 and positioned so as to be in contact with the upper support member 400a, while being held by the gripper 200a. After the optic has been positioned concentric with the upper support member 400a, the lower support member 400b is raised by the air cylinder 415 until it pushes simultaneously against the optic 1 and gripper 300a causing the fingers to extend radially outward and release the lens, which is held securely between the upper and lower support members 400a, 400b. A spring 410 maintains the lower support member 400b in contact with the lens.

At the grinding station 18, excess resin is trimmed from the periphery of the lens using a grinding wheel. Preferably, the grinding wheel is moved proximate the periphery of the optic using horizontal and vertical motors, and once properly positioned, the wheel is driven by a motor. The grinding wheel, platform 400a, 400b and lens 70 are preferably contained in a debris containment enclosure (not shown). During of the excess resin from the lens' periphery, an array of nozzles disposed along the periphery of the enclosure sprays a fluid, for example, deionized water, air, and the like, or a combination thereof against the inner wall of the enclosure. The ground particles or debris are attracted to the sprayed water and flushed out of the debris containment enclosure a series of channels in the floor of the enclosure.

After the excess resin has been trimmed from the periphery of the lens, the transfer means 11 downloads the optic from between the vertical support members 400a, 400b of the grinding station 18 and moves the optic to the cleaning and drying station 17. To remove the optic from between the vertical support members 400a, 400b of the grinding station 18, the fingers of the gripper 300a are placed around the periphery of the lens and then the lower support member 400b is lowered thereby releasing the lens.

At the cleaning and drying station 17, the lens is held by a platform of similar construction to that provided at the grinding station 18. Once the lens has been positioned on the platform at the cleaning and drying station 17, both surfaces of the optic are sprayed with a cleaning fluid, such as deionized water. Vertical support members 400a, 400b are mounted eccentrically on a shaft connected to a center axis that is driven by a servomotor. The centrifugal force generated by rotation of the optic causes the cleaning fluid to slide off the surfaces of the lens, hit the side of the water and air containment enclosure, and fall into a channel for receiving the run-off cleaning fluid.

The transfer means 11 moves the lens from the cleaning and drying station 17 to the outfeed station 14. While moving the lens to the outfeed station 14, the gripper is simultaneously verifying the lens' diameter and transmitting the detected information to the processor 20 to check that it conforms with the selected recipe. After the lens has been placed on the platform at the outfeed station 14 and the transfer means 11 has been moved out of the way, the machine transmits information to processor 20 signaling that processing of the optic is completed. When the lens is picked up from the platform at the outfeed station 14, the signal is reset.

In addition to trimming or alternatively thereto, the unfinished lenses undergo a post-curing step (119) in which each lens is heated to relieve cure-induced stresses. Preferably, the lens is trimmed and post-cured. Post-cure heating may be carried out by any convenient method including, without limitation, using thermal, infrared, or microwave energy or combinations thereof. Preferably, the lens is heated using thermal energy for about 1 to about 30, preferably about 5 to about 15 mins at a temperature of about 50 to about 125, preferably about 80 to about 110° C.

Optionally and preferably, following post-curing the unfinished lens also undergoes coating (120) of the layer or layers cast onto the preform. Any of a variety of coatings may be used including, without limitation, anti-reflective coatings, scratch resistant coatings, photochromic coatings, polarizing coatings and the like, and combinations thereof. One ordinarily skilled in the art will recognize that the coatings stage may require that the coated preform be cured by any of a variety of means including, without limitation, radiation cure, thermal cure, visible light cure, and the like, and combinations thereof.

In a preferred embodiment, a scratch resistant coating is applied to the front surface of the unfinished lens using a coating machine such as the ASC 500. In such a process, the applied coating is cured via thermal cure provided by and infrared heater operating under conditions suitable to render the coating tack free. Generally, curing takes place at a temperature of about 482°C (900°F) to about 593°C (1100°F).

The unfinished lens preferably then undergoes cosmetic inspection, power inspection, or both. For purposes of inspection, the unfinished lens is transferred by a transport means to an automated inspection station. Any suitable inspection means may be used to inspect the lens, such as the commercially available Pro-Laser LENSPECTOR™ system.

The lenses passing inspection then undergo thermal curing under conditions suitable to complete curing of the hard, or scratch resistant coating. Generally, suitable conditions are curing temperatures of about 115 to about 125 ° C and exposure times are about 2½ to about 3½ hours. Following thermal curing, the unfinished lens is ready to enter lens finishing.

### Lens Finishing:

In lens finishing (103), the unfinished lens undergoes one or more of optical inspection, marking, edging, and packaging. Following thermal cure completion, lenses preferably are transported via transport means to an optical inspection and marking station. Thickness of the lens as well as one or more of sphere power, add power, cylinder power, cylinder axis, prism and base power are measured to verify that they are within the desired tolerance. One or more of the fitting point, distance and near power reading areas and the 0-180 degree line may be marked. Automated power and marking equipment is commercially available from any of a number of sources including Automation Robotics of Verviers, Belgium.

The marked lenses may then undergo additional coating including, without limitation, anti-reflective coating, tinting, or the like. The marked lenses, whether or not they undergo coating, are transported to an edging station to be edged to the shape of the frame into which the lenses will be mounted. Edging may be performed by any convenient edging means such as an automated edging machine. Suitable automated edging machines are commercially available. Edging preferably includes placement of any bevel that is desired.

Edged lenses are then transported for packaging. Preferably, both a primary and secondary package are used. The primary package protects each lens from damage during shipping and identifies the product specific, such as order number, prescription, lens orientation, and the like. The primary package may be of any suitable material known to the industry including, without limitation, a lined paper envelope. The secondary package may be used to store and transport a pair of matched lenses. Delivery of the finished lenses to the customer may be carried out using any suitable delivery means, which means are well known.

### Manufacturing Execution System

Preferably, the entire lens production process, from inventory control, to preform formation, to lens formation, tracking, and finishing is controlled by a manufacturing execution system ("MES"). The manufacturing execution system is a scheduling, tracking, and control system connecting a lens ordering system to the manufacturing equipment. For example, the system is used to control the injection molding machine and preform flow through the production and storage processes. The system hardware may include, without limitation, servers, network hubs, personal computers, scanners, and the like. Commercially available software may be used to run the system.

In a preferred embodiment, the MES receives a lens order from the ERP which order provides an amount of order information suitable for producing the desired lens. The MES assigns an order number to each order, which number is used to track the product throughout the manufacturing process and enables the MES to provide the manufacturing machines with instructions necessary to produce the desired lens. Preferably, carriers are used to transport the preform, unfinished , and finished lenses, which carriers have a identification means, such as a bar code, embedded tag or the like, that is used by the MES to associate the preform or lens with an order number. The identification means is read by a scanning means, such as a bar code reader, at the loading and unloading stations associated with the production machinery.

In the production of the preforms, the MES schedules production based on inventory levels and forecasted requirements. Additionally, the MES stores the process information for each preform lot produced.

In unfinished lens production in which stored preform are used, the MES may be used to signal the preform storage unit to dispense the desired preform and to place it into the production line. One or more of the distance power, cylinder power, add power, cylinder axis, and designation of right or left lens is used to select the appropriate preform to be used to fulfill the order. The MES also is used to instruct the preform precutting machine to trim the preform to the smallest effective diameter.

Once the preform is selected, the MES matches the preform with the appropriate mold using one or more or the mold's distance power, add power, and left or right eye designation. Once the preform and mold are matched, the casting is carried out. The MES instructs the casting machine as to the desired casting resin volume to be used based on the preform and molds selected. Additionally, the MES directs as to the rotation and tilt of the preform in relation to the mold.

Once the lens is cast the MES provides the trimming machine with the diameter of each lens so that the lens may be trimmed to the desired size. For purposes of coating the lens, the MES provides the front coating machine. With the lens diameter so that the desired amount of coating is applied.

Once unfinished lens fabrication is complete, the MES provides the optical inspection and marking machine with the target values for the lens that is being inspected. For those lenses that pass inspection, the MES directs the ink stamp, the function of which is determined by whether the lens is for the right or left eye. For those lenses that undergo additional coating, such as anti-reflective coating, the MES directs a laser engraver to mark the lens, preferably by use of a laser, so that the lens may be tracked through the coating process.

Once the lens is ready for edging, the MES provides the edging machines with the desired geometry to carry out the edging of the lens. The geometry is based on the frame trace data stored in the database for the order. Alternatively, MES will locate the frame into which the lens is to be fitted in the frame inventory so that the lens may be mounted.

In the final processing steps of primary and secondary packaging, the MES provides packaging labeling information and a tracking bar code for the package. Finally, the MES provides shipping information by which the finished lenses will be shipped for delivery to the customer. If there are multiple lenses to be shipped to a site, the MES will bundle the lenses for shipment.

## Claims

1. A method for automatically producing spectacle lenses comprising the steps of:
a.) producing (101) a plurality of optical preforms, each of the preforms comprising, at least a first refractive power;
b.) fabricating (102) a plurality of unfinished lenses, each of the unfinished lenses comprising one of the plurality of optical preforms and at least one layer cast onto the preform, the cast layer comprising at least a second refractive power, the step of fabricating a plurality of unfinished lenses comprising providing (110) a mold assembly by:
(α) selecting (115) a preform and mold;
(β) orienting (116) the mold and preform; and
(γ) positioning (117) the preform in relationship to the mold; and **characterised in that**:
step (γ) is accomplished by use of a fixture capable of a gimbaling action, and further comprising
c.) finishing (103) each of the plurality of unfinished lenses to form a spectacle lens by performing one or more of the substeps of:
(i) inspecting optically the unfinished lens;
(ii) marking the unfinished lens;
(iii) edging the unfinished lens to produce a finished lens; or
(iv) packaging the unfinished lens.

2. The method of claim 1, wherein the formed spectacle lens is a multifocal lens.

3. The method of claim 2, wherein the multifocal lens is a progressive addition lens.

4. The method of claim 1, wherein the first refractive power is different from the second refractive power.

5. The method of claim 1, wherein the first refractive power is a distance vision refractive power, a near vision refractive power, an intermediate vision refractive power, a cylinder power, a prismatic power, or a combination thereof.

6. The method of claim 5, wherein each of the preforms comprises a spherical front surface and a progressive addition back surface.

7. The method of claim 6, wherein the back surface further comprises cylinder power.

8. The method of claim 1, wherein the second refractive power is a distance vision refractive power, a near vision refractive power, an intermediate vision refractive power, a cylinder refractive power, or a combination thereof.

9. The method of claim 8, wherein the second refractive power is a distance vision refractive power.

10. The method of claim 1, wherein the cast layer forms a progressive surface.

## Patentansprüche

1. Verfahren zur automatischen Herstellung von Brillenlinsen, das folgende Schritte beinhaltet:
a) Herstellen (101) mehrerer optischer Vorformlinge, wobei jeder der Vorformlinge wenigstens eine erste Brechkraft aufweist;
b) Herstellen (102) mehrerer unfertiger Linsen, wobei jede der unfertigen Linsen eine der mehreren optischen Vorformlinge sowie wenigstens eine Schicht aufweist, die auf den Vorformling gegossen ist, wobei die Gussschicht wenigstens eine zweite Brechkraft aufweist, wobei der Schritt des Herstellens mehrerer unfertiger Linsen das Bereitstellen (110) eines Formwerkzeugs beinhaltet, durch:
α) Auswählen (115) eines Vorformlings und einer Form;
β) Ausrichten (116) der Form und des Vorformlings; und
γ) Anordnen (117) des Vorformlings relativ zu der Form; und **dadurch gekennzeichnet, dass**
Schritt γ) mittels einer Spannvorrichtung bewerkstelligt wird, die in der Lage ist, eine kardanische Aktion zu vollführen; und des Weiteren Folgendes beinhaltet:
c) Endbearbeiten (103) jeder der mehreren unfertigen Linsen zu einer Brillenlinse durch Ausführen eines oder mehrerer der folgenden Teilschritte:
i) optisches Inspizieren der unfertigen Linse;
ii) Markieren der unfertigen Linse;
iii) Rundieren der unfertigen Linse, so dass eine fertige Linse entsteht; oder
iv) Verpacken der unfertigen Linse.

2. Verfahren nach Anspruch 1, wobei es sich bei der hergestellten Brillenlinse um eine multifokale Linse handelt.

3. Verfahren nach Anspruch 2, wobei es sich bei der multifokalen Linse um eine progressive Zusatzwirkungslinse handelt.

4. Verfahren nach Anspruch 1, wobei sich die erste Brechkraft von der zweiten Brechkraft unterscheidet.

5. Verfahren nach Anspruch 1, wobei es sich bei der ersten Brechkraft um eine Weitsichtbrechkraft, eine Nahsichtbrechkraft, eine Zwischensichtbrechkraft, eine Zylinderkraft, eine prismatische Kraft oder um eine Kombination daraus handelt.

6. Verfahren nach Anspruch 5, wobei jeder der Vorformlinge eine sphärische Vorderseite und eine Rückseite mit progressiver Zusatzwirkung aufweist.

7. Verfahren nach Anspruch 6, wobei die Rückseite des Weiteren eine Zylinderkraft aufweist.

8. Verfahren nach Anspruch 1, wobei es sich bei der zweiten Brechkraft um eine Weitsichtbrechkraft, eine Nahsichtbrechkraft, eine Zwischensichtbrechkraft, eine Zylinderbrechkraft oder um eine Kombination daraus handelt.

9. Verfahren nach Anspruch 8, wobei es sich bei der zweiten Brechkraft um eine Weitsichtbrechkraft handelt.

10. Verfahren nach Anspruch 1, wobei die Gussschicht eine progressive Oberfläche bildet.

## Revendications

1. Procédé de production automatique de verres de lunettes comprenant les étapes consistant à :
a) produire (101) une pluralité de préformes optiques, chacune des préformes comprenant au moins une première réfringence ;
b) fabriquer (102) une pluralité de verres non-finis, chacun des verres non-finis comprenant une parmi une pluralité de préformes optiques et au moins une couche coulée sur la préforme, la couche coulée comprenant au moins une deuxième réfringence, l'étape consistant à fabriquer une pluralité de verres non-finis comprenant l'étape de fournir (110) un assemblage de moule par :
(α) la sélection (115) d'une préforme et d'un moule ;
(β) l'orientation (116) du moule et de la préforme ; et
(γ) le positionnement (117) de la préforme par rapport au moule; et **caractérisé en ce que** :
l'étape (γ) est réalisée par l'utilisation d'un dispositif capable d'une action de rotation et comprend en outre l'étape de :
c) finir (103) chacun de la pluralité de verres non-finis pour former un verre de lunettes en réalisant une ou plusieurs des sous-étapes consistant à :
(i) inspecter optiquement le verre non-fini ;
(ii) marquer le verre non-fini ;
(iii) affiner le verre non-fini pour produire un verre fini ; ou
(iv) emballer le verre non-fini.

2. Procédé selon la revendication 1, dans lequel le verre de lunettes formé est un verre multifocal.

3. Procédé selon la revendication 2, dans lequel le verre multifocal est un verre à foyer progressif.

4. Procédé selon la revendication 1, dans lequel la première réfringence est différente de la deuxième réfringence.

5. Procédé tel que revendiqué à la revendication 1, dans lequel la première réfringence est une réfringence de vision éloignée, une réfringence de vision de près, une réfringence de vision intermédiaire, une puissance cylindrique, une puissance prismatique ou une combinaison de celles-ci.

6. Procédé selon la revendication 5, dans lequel chacune des préformes comprend une surface avant sphérique et une surface arrière à foyer progressif.

7. Procédé selon la revendication 6, dans lequel la surface arrière comprend en outre une puissance cylindrique.

8. Procédé selon la revendication 1, dans lequel la deuxième réfringence est une réfringence de vision éloignée, une réfringence de vision de près, une réfringence de vision intermédiaire, une réfringence cylindrique ou une combinaison de celles-ci.

9. Procédé selon la revendication 8, dans lequel la deuxième réfringence est une réfringence de vision éloignée.

10. Procédé selon a revendication 1, dans lequel la couche moulée forme une surface progressive.
